# EUROPEAN PATENT APPLICATION

(11) **EP 3 872 565 A1**
(43) Date of publication of application: **01.09.2021**
(21) Application number: 19934343.5
(22) Date of filing: 26.06.2019
(51) Int. Cl.: G03B 9/14

(54) **SHUTTER STRUCTURE AND PHOTOGRAPHING DEVICE**

(71) Applicant: SZ DJI Technology Co., Ltd., Shenzhen, Guangdong 518057 (CN)
(72) Inventor: ZHU, Congcong, Shenzhen, Guangdong 518057 (CN); ZHU, Zhilong, Shenzhen, Guangdong 518057 (CN); HUANG, Tongyao, Shenzhen, Guangdong 518057 (CN)
(74) Representative: Appelt, Christian W.
(86) International application number: PCT/CN2019/093081
(87) International publication number: WO 2020/258091

(57) **Abstract**

A shutter structure (100) and a photographing device (1000) are provided. The shutter structure (100) includes a stator assembly (20), a rotor assembly (40), and a blade assembly (60). The stator assembly (20) includes a mounting member (24) and a cover (28). The rotor assembly (40) is sleeved over by the mounting member (24). The blade assembly (60) includes blades (62) rotatably connected to the cover (28). The rotor assembly (40) drives a guide rod (624) to drive the blades (62) to rotate around a rotating shaft (622).

## Description

### TECHNICAL FIELD

The present application relates to the field of imaging technologies, and more specifically, to a shutter structure and a photographing device.

### BACKGROUND

With the rapid development of science and technology, higher requirements are imposed on imaging technologies of electronic devices having photographing functions, such as mobile phones, camcorders, and cameras. Most of the existing inter-lens shutters use a plurality of connecting rods and spring structures to implement lens opening and closing and exposure. However, a inter-lens shutter of this structure is complex and not compact.

### BRIEF SUMMARY

Embodiments of the present application provide a shutter structure and a photographing device.

The present application provides a shutter structure. The shutter structure includes a stator assembly, a rotor assembly, and a blade assembly. The stator assembly includes an annular mounting member, a base mounted on a first side of the mounting member, and a cover mounted on a second side of the mounting member, the base is provided with an aperture, the cover is provided with a through-hole corresponding to the aperture, and the first side is opposite to the second side. The rotor assembly is sandwiched between the base and the cover, the rotor assembly is sleeved over by the mounting member from the second side and provided with a light-passing hole corresponding to the aperture and the through-hole, and the rotor assembly interacts with the stator assembly so that the rotor assembly is rotatable relative to the stator assembly. The blade assembly includes a plurality of blades, the plurality of blades is all rotatably connected by a rotating shaft to a side of the cover away from the rotor assembly, a guide rod on each blade passes through the cover and the rotor assembly in sequence, and when the rotor assembly rotates relative to the stator assembly, the rotor assembly drives the guide rod to move in the cover, thereby driving the plurality of blades to rotate around an axis of the rotating shaft to at least partially block the through-hole or at least partially open the through-hole.

The present application provides a photographing device. The photographing device includes a housing and a shutter structure. The shutter structure is assembled with the housing. The shutter structure includes a stator assembly, a rotor assembly, and a blade assembly. The stator assembly includes an annular mounting member, a base mounted on a first side of the mounting member, and a cover mounted on a second side of the mounting member, the base is provided with an aperture, the cover is provided with a through-hole corresponding to the aperture, and the first side is opposite to the second side. The rotor assembly is sandwiched between the base and the cover, the rotor assembly is sleeved over by the mounting member from the second side and provided with a light-passing hole corresponding to the aperture and the through-hole, and the rotor assembly interacts with the stator assembly so that the rotor assembly is rotatable relative to the stator assembly. The blade assembly, wherein the blade assembly includes a plurality of blades, the plurality of blades is all rotatably connected by a rotating shaft to a side of the cover away from the rotor assembly, a guide rod on each blade passes through the cover and the rotor assembly in sequence, and when the rotor assembly rotates relative to the stator assembly, the rotor assembly drives the guide rod to move in the cover, thereby driving the plurality of blades to rotate around an axis of the rotating shaft to at least partially block the through-hole or at least partially open the through-hole.

In the photographing device according to this embodiment of the present application, the plurality of blades is all rotatably connected by the rotating shaft to the side of the cover of the stator assembly away from the rotor assembly, the guide rod on each blade passes through the cover and the rotor assembly in sequence, and the rotor assembly interacts with the stator assembly so that the rotor assembly is rotatable relative to the stator assembly, thereby driving the guide rod to move in the cover, and further driving the plurality of blades to rotate around the rotating shaft to at least partially block the through-hole or at least partially open the through-hole. Therefore, the shutter structure can avoid using the multi-link structure and the spring structure to implement rotation of the blades and the exposure, thereby keeping the structure simple and compact.

The additional aspects and advantages of the embodiments of the present application will be partly given in the following description, and part of them will become clear from the following description, or be understood through the practice of the embodiments of the present application.

### BRIEF DESCRIPTION OF THE DRAWINGS

The foregoing and/or additional aspects and advantages of the present application become more apparent and comprehensible in the descriptions of embodiments in combination with the accompanying drawings.
FIG. 1 is a schematic assembled three-dimensional view of a shutter structure from one perspective according to an embodiment of the present application;
FIG. 2 is a schematic assembled three-dimensional view of the shutter structure shown in FIG. 1 from another perspective;
FIG. 3 is a schematic exploded three-dimensional view of the shutter structure shown in FIG. 1 from one perspective;
FIG. 4 is a schematic plan view of the shutter structure shown in FIG. 1 from one perspective;
FIG. 5 is a schematic cross-sectional view of the shutter structure shown in FIG. 4 along a cross-section line V-V;
FIG. 6 is a top view of the shutter structure shown in FIG. 2;
FIG. 7 is a schematic cross-sectional view of FIG. 6 along a cross-section line VII-VII; and
FIG. 8 is a schematic view of a three-dimensional structure of a photographing device according to an embodiment of the present application.

Reference numerals of main components: shutter structure 100, stator assembly 20, base 22, base body 222, first end 2222, second end 2224, connecting arm 224, extension portion 2242, snap-fit portion 2244, aperture 226, mounting member 24, mounting ring 242, snap-fit slot 2422; supporting portion 244, blocking portion 246, first magnetic unit 26, first magnetic member 262, cover 28, cover body 282, second guide hole 2822, connecting hole 2824, coupling portion 284, through-hole 286, rotor assembly 40, light-passing hole 42, holder 44, holder body 442, first surface 4422, second surface 4424, mounting slot 4426, gap 4428, lug 444, first guide hole 4442, yoke frame 46, yoke body 462, mounting portion 464, second magnetic unit 48, second magnetic member 482, magnetic unit group 50, blade assembly 60, blade 62, rotating shaft 622, guide rod 624, recess 626, first washer 82, second washer 84, photographing device 1000, and housing 200.

### DETAILED DESCRIPTION OF THE DRAWINGS

The following describes the embodiments of the present application in detail. Examples of the embodiments are illustrated in the accompanying drawings, where eidentical or similar reference numerals always represent identical or similar components or components having identical or similar functions. The following embodiments described with reference to the accompanying drawings are exemplary and are used only to explain the present application and should not be understood as limitations on the present application.

In the descriptions of the present application, it should be understood that directions or position relationships indicated by terms "center", " longitudinal", " lateral", "length", "width", "thickness", "up", "down", "front", "rear", "left", "right", "vertical", "horizontal", "top", "bottom", "internal", "external", "clockwise", and "counterclockwise" are directions or position relationships based on the accompanying drawings, and are used only for conveniently describing the present application and simplifying the descriptions, but do not indicate or imply that a corresponding apparatus or component must have a specific direction and must be constructed and operated in a specific direction, and therefore cannot be understood as limitations on the present application. In addition, the terms "first" and "second" are intended only for description, and shall not be understood as an indication or implication of relative importance or an implicit indication of the quantity of indicated technical features. Therefore, a feature defined by "first" or "second" may explicitly or implicitly include one or more features. In the descriptions of the present application, "plurality" means two or more unless otherwise defined.

In the descriptions of the present application, it should be noted that unless otherwise specified and defined, terms "mounted", "connected", and "connection" should be understood in a broad sense. For example, the connection may be a fixed connection, or may be a detachable connection or an integrated connection. The connection may be mechanical, or may be electrical. The connection may be a direct connection, or may be an indirect connection through an intermediate medium, or may be an internal connection between two components or an interaction relationship between two components. A person of ordinary skill in the art may understand specific meanings of these terms in the present application based on specific situations.

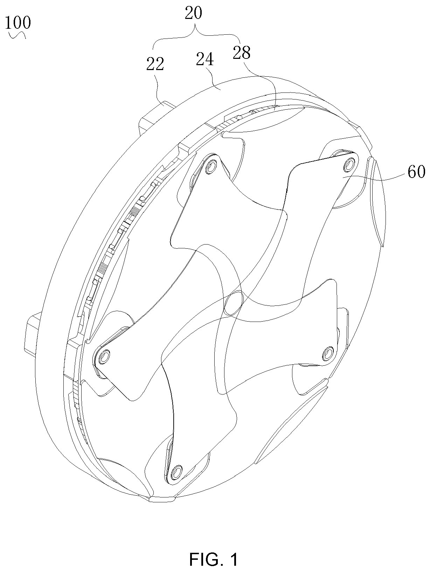

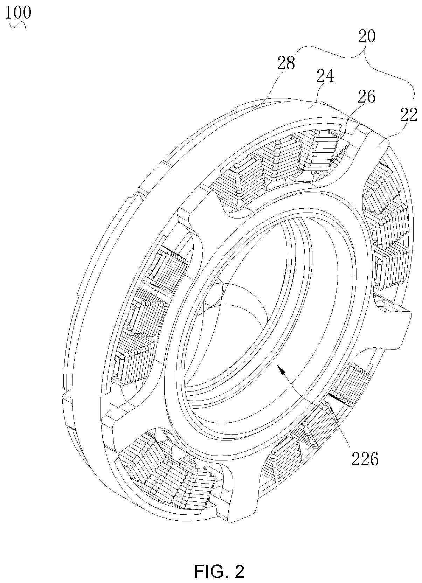

Referring to FIG. 1 to FIG. 3, the present application provides a shutter structure 100. The shutter structure 100 includes a stator assembly 20, a rotor assembly 40, and a blade assembly 60. The stator assembly 20 includes an annular mounting member 24, a base 22 mounted on a first side 2482 of the mounting member 24, and a cover 28 mounted on a second side 2484 of the mounting member 24. The base 22 is provided with an aperture 226, the cover 28 is provided with a through-hole 286 corresponding to the aperture 226, and the first side 2482 is opposite to the second side 2484. The rotor assembly 40 is sandwiched between the base 22 and the cover 28, the rotor assembly 40 is sleeved over by the mounting member 24 from the second side 2484 and provided with a light-passing hole 42 corresponding to the aperture 226 and the through-hole 286, and the rotor assembly 40 interacts with the stator assembly 20 so that the rotor assembly 40 can rotate relative to the stator assembly 20. The blade assembly 60 includes a plurality of blades 62, the plurality of blades 62 is all rotatably connected by a rotating shaft 622 to a side of the cover 28 away from the rotor assembly 40, a guide rod 624 on each blade 62 passes through the cover 28 and the rotor assembly 40 in sequence, and when the rotor assembly 40 rotates relative to the stator assembly 20, the rotor assembly 40 drives the guide rod 624 to move in the cover 28, thereby driving the plurality of blades 62 to rotate around the rotating shaft 622 to at least partially block the through-hole 286 or at least partially open the through-hole 286.

In the shutter structure 100 in this embodiment of the present application, the plurality of blades 62 is all rotatably connected by the rotating shaft 622 to the side of the cover 28 of the stator assembly 20 away from the rotor assembly 20, the guide rod 624 on each blade 62 passes through the cover 28 and the rotor assembly 40 in sequence, and the rotor assembly 40 interacts with the stator assembly 20 so that the rotor assembly 40 can rotate relative to the stator assembly 20, thereby driving the guide rod 624 to move in the cover 28, and further driving the plurality of blades 62 to rotate around the rotating shaft 622 to at least partially block the through-hole 286 or at least partially open the through-hole 286. Therefore, the shutter structure 100 can avoid using the multi-link structure and the spring structure to implement rotation of the blades 62 and the exposure, thereby keeping the structure simple and compact.

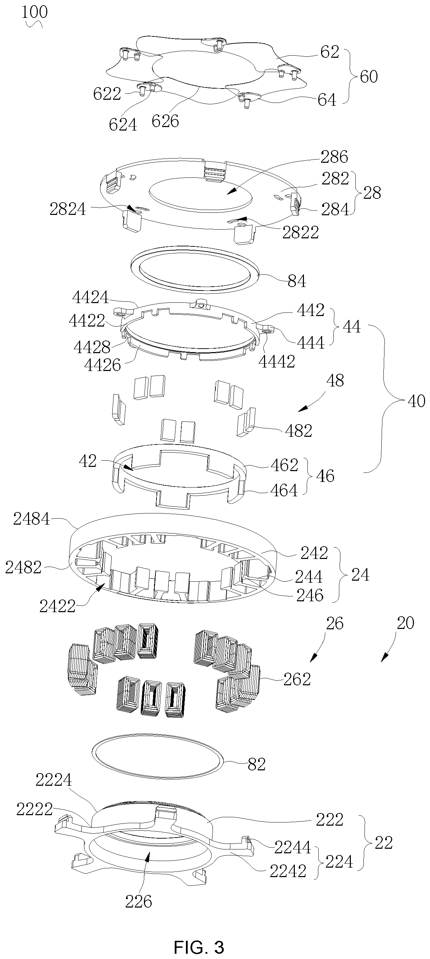

Specifically, referring to FIG. 3, the stator assembly 20 includes the base 22, the mounting member 24, at least one first magnetic unit 26, and the cover 28.

The base 22 includes a cylinder-shaped base body 222 and a plurality of connecting arms 224 that extends from an outer peripheral wall of the base body 222.

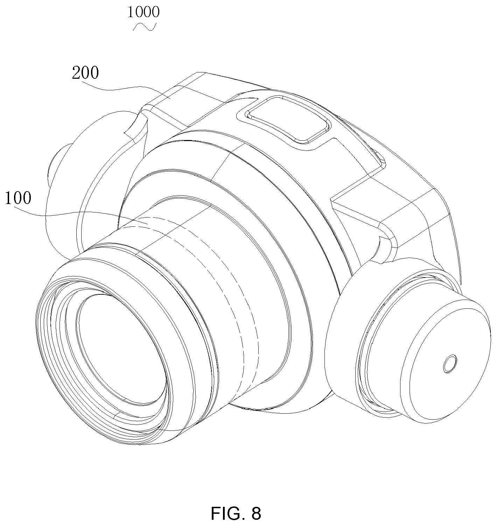

The base body 222 has a hollow structure forming the aperture 226. The base body 222 includes a first end 2222 proximal to the connecting arm 224 and a second end 2224 opposite to the first end 2222. The aperture 226 passes through the first end 2222 and the second end 2224. Light reflected by an object in an external scene passes through the aperture 226 and then enters an image sensor (not shown in the figure) of a photographing device 1000 (shown in FIG. 8). The image sensor is configured to convert an optical signal into an electrical signal to obtain an image.

There is a plurality of connecting arms 224, which are located at the first end 2222 of the base body 222. The plurality of connecting arms 224 is evenly distributed at intervals in a circumferential direction of the base body 222. To be specific, the plurality of connecting arms 224 is evenly distributed around a center of the aperture 226. There may be 2, 3, 4, 5, 6, 8, or more connecting arms 224, which may be set based on an actual requirement. In this embodiment, the quantity of connecting arms 224 is 5, and an included angle between extension lines of length directions of two adjacent connecting arms 224 is 72°. In other embodiments, the plurality of connecting arms 224 may not be evenly distributed at intervals in the circumferential direction of the base body 222. For example, there are also five connecting arms 224, but included angles between extension lines of length directions of any two connecting arms 224 are mutually different. Gaps between the connecting arms 224 facilitate heat dissipation of a first magnetic member 262. In some embodiments, the connecting arm 224 may also be an annular substrate. To be specific, the plurality of connecting arms 224 forms a complete annular structure and surround the first end 2222 of the outer peripheral wall of the base body 222. Specifically, each connecting arm 224 includes an extension portion 2242 that extends from the outer peripheral wall of the base body 222 and a snap-fit portion 2244 that extends from an end of the extension portion 2242 away from the outer peripheral wall. In this embodiment, the snap-fit portion 2244 vertically extends from the extension portion 2242, and an extension direction faces toward the second end 2224.

Still referring to FIG. 3, the mounting member 24 sleeves over the base 22 and sits on the plurality of connecting arms 224, and each connecting arm 224 is detachably coupled with the mounting member 24. Specifically, the mounting member 24 includes a mounting ring 242, a supporting portion 244 that extends from an inner wall of the mounting ring 242, and a blocking portion 246 that extends from an end of the supporting portion 244 away from the inner wall.

The mounting ring 242 is basically in an annular shape. The mounting ring 242 includes a first side 2482 (that is, the first side 2482 of the mounting member 24) facing toward the connecting arm 224 and a second side 2844 (that is, the second side 2844 of the mounting member 24) opposite to the first side 2482. A plurality of snap-fit slots 2422 corresponding to the plurality of connecting arms 224 is provided on the inner wall of the mounting ring 242, and the snap-fit slots 2422 pass through the first side 2482 and the second side 2844. The mounting member 24 sleeves over the base body 222 and sits on the plurality of connecting arms 224, and the snap-fit portion 2244 of each connecting arm 224 is snapped into the snap-fit slot 2422 from the first side 2482, so that each connecting arm 224 is detachably engaged with the inner wall of the mounting ring 242. In this embodiment, the quantity of snap-fit slots 2422 is 5, and corresponds to the quantity of connecting arms 224. In other embodiments, there may be 2, 3, 6, or more snap-fit slots 2422, and the quantity of snap-fit slots 2422 may not be the same as the quantity of connecting arms 224 either. For example, the quantity of snap-fit slots 2422 is greater than the quantity of connecting arms 224. In other embodiments, the mounting ring 242 may be detachably mounted on the connecting arms 224 in other ways, for example, screw connection, thread connection, and the like.

One end of the supporting portion 244 is fixed on the inner wall of the mounting ring 242, and the other end of the supporting portion 244 faces toward a center of the mounting ring 242. There is a plurality of supporting portions 244, and the plurality of supporting portions 244 is evenly distributed at intervals around the center of the mounting ring 242. The quantity of supporting portions 244 may be 1, 2, 3, 5, 6, 9, 12, 15, 27, or more, and may be set based on a requirement. In this embodiment, the quantity of supporting portions 244 is 15. Every three of the quantity of supporting portions are evenly disposed at intervals and form a group, and there are five groups in total. The five groups of supporting portions 244 are evenly distributed at intervals around the center of the mounting ring 242. A snap-fit slot 2422 is disposed between two adjacent groups of supporting portions 2445. In other embodiments, each group of supporting portions 244 may include 2, 4, 5, or more supporting portions. In other embodiments, the plurality of supporting portions 244 may also be randomly distributed around the inner wall of the mounting ring 242.

An end of the supporting portion 244 away from the inner wall extends to form the blocking portion 246. The blocking portion 246 is approximately in a plate shape, and a lateral surface of the blocking portion 246 away from the supporting portion 244 is a curved surface, for example, an arc surface. In other embodiments, the lateral surface of the blocking portion 246 away from the supporting portion 244 may also be a flat surface.

In this embodiment, the mounting ring 242, the supporting portion 244, and the blocking portion 246 are an integrated structure, that is, the mounting member 24 is an integrated structure. The mounting member 24 may be made of a magnetic material such as soft iron or silicon steel. In other embodiments, the supporting portion 244 and the blocking portion 246 are an integrated structure, and after being formed, the integrated structure is mounted to the mounting ring 242 by gluing or welding or the like. The supporting portion 244 and the blocking portion 246 may be made of a magnetic material such as soft iron or silicon steel, and the mounting ring 242 may be made of another material, for example, plastic or rubber. The supporting portion 244 may be detachably connected to the mounting ring 242.

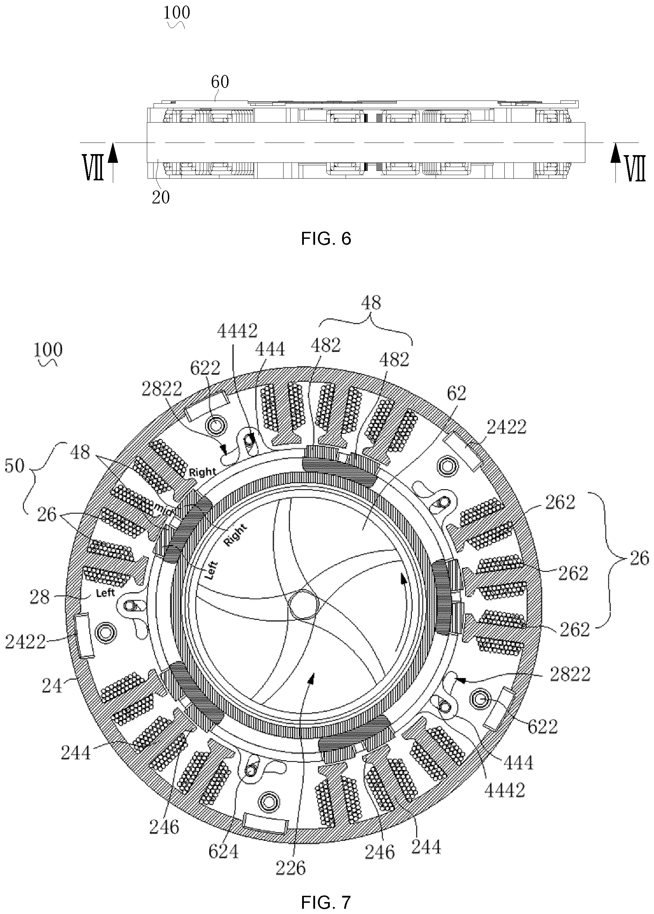

With reference to FIG. 7, there may be one or more first magnetic units 26. When there is a plurality of first magnetic units 26, for example, 2, 3, 5, 6, 9, or more first magnetic units 26, the plurality of first magnetic units 26 is evenly distributed at intervals in a circumferential direction of an inner ring surface of the mounting ring 242. To be specific, the plurality of first magnetic units 26 is evenly distributed around a central axis of the aperture 226. Each first magnetic unit 26 includes N (N is greater than or equal to 2) first magnetic members 262 arranged at intervals. For example, there may be 2, 3, 6, 7, 8, 9, 12, 15, 18, or more first magnetic members 262. Each first magnetic member 262 is correspondingly mounted on a supporting portion 244, and is located between the blocking portion 246 and the inner wall of the mounting ring 242. To be specific, the quantity and positions of supporting portions 244 may be set based on the quantity and positions of first magnetic members 262. In this embodiment, there are five first magnetic units 26, and the five first magnetic units 26 are evenly distributed at intervals in a circumferential direction of an inner ring of the mounting ring 242. Each first magnetic unit 26 includes three adjacent first magnetic members 262 disposed at intervals. The first magnetic member 262 may be a coil, and the coil winds around the supporting portion 244. The coil 2622 is configured to generate an electromagnetic field during energization. The quantity of turns of the coil 2622 may be 1, 5, 8, 10, 15, 20, 30, 50, or more, and may be set based on an actual requirement. If the quantity of turns of the coil is larger, an electromagnetic force generated by the first magnetic member 262 is greater. If the quantity of first magnetic members 262 is larger, a total electromagnetic force of the first magnetic unit 26 is greater.

Referring to FIG. 3 to FIG. 5, the cover 28 includes a cover body 282 and a plurality of coupling portions 284 that extends from the cover body 282 toward a surface of the base 22, and the cover 28 is mounted on the mounting ring 242.

The cover body 282 is provided with a through-hole 286 corresponding to and connected to the aperture 226, a plurality of connecting holes 2824 spaced apart from each other, and a plurality of second guide holes 2822. The aperture 226 is approximately in a central position. The plurality of connecting holes 2824 is evenly disposed at intervals around a center of the cover body 282 (that is, the center of the aperture 226). The second guide holes 2822 are located between the aperture 226 and the connecting holes 2824, and are also evenly disposed at intervals around the center of the cover body 282 (that is, the center of the aperture 226), and each connecting hole 2824 corresponds to a second guide hole 2822. The second guide hole 2822 is in an arc shape, and a center of curvature of the arc coincides (is the same as) a center of a corresponding connecting hole 2824, and the center of the corresponding connecting hole 2824 and the center of the through-hole 286 are located on a same straight line. The quantity of connecting holes 2824 and the quantity of second guide holes 2822 are the same. Both the quantity of connecting holes 2824 and the quantity of second guide holes 2822 may be 2, 4, 5, 6, or 8. In this embodiment, the quantity of connecting holes 2824 is 5.

The coupling portions 284 are evenly distributed at intervals at an edge of the cover body 282 around the center of the cover body 282 and correspond to the snap-fit slots 2422. There is a plurality of coupling portions 284. Each coupling portion 284 is engaged with the inner wall of the mounting ring 242 so that the cover 28 is detachably mounted on the mounting ring 242. Specifically, the plurality of coupling portions 284 is snapped into the snap-fit slots 2422 from the second side 2484, and are opposite to the snap-fit portions 2244. In this embodiment, each coupling portion 284 corresponds to one snap-fit portion 2244. The coupling portion 284 and the corresponding snap-fit portion 2244 are snapped into a same snap-fit slot 2422 simultaneously. This can not only facilitate mounting and dismounting of the shutter structure 100, but also make the shutter structure 100 more compact and lighter structurally. To be specific, in this embodiment, the quantity of coupling portions 284 may also be 5, and the five coupling portions 284 correspond to five snap-fit slots 2422. In some embodiments. Alternatively, there may be 2, 4, 6, 9, or more coupling portions 284, which may be set based on a requirement. In other embodiments, the mounting ring 242 is additionally provided with a snap-fit slot for snapping the coupling portion 284 onto the inner wall of the mounting ring 242. In this case, the coupling portion 284 is snapped into the snap-fit slot from the second side 2484, and the snap-fit portion 2244 is snapped into the snap-fit slot 2422 from the first side 2482. In other embodiments, the method for detachably mounting the cover body 282 on the mounting ring 242 may also be another method, for example, screw connection or thread connection; or the cover body 282 may be mounted on the base 22. In this embodiment, the base 22, the mounting member 24, and the cover 28 are detachably connected for ease of winding a coil on the mounting member 24.

Referring to FIG. 3, FIG. 6, and FIG. 7, the rotor assembly 40 further includes a holder 44, a yoke frame 46, and at least one second magnetic unit 48. The rotor assembly 40 sleeves over the base body 222.

The holder 44 includes a holder body 442 and a plurality of lugs 444 that extends along an outer sidewall of the holder body 442.

The holder body 442 is in an annular shape, and sleeves over an outer peripheral of the second end 2224 of the base body 222. The holder body 442 includes a first surface 4422 facing toward the connecting arm 224 and a second surface 4424 opposite to the first surface 4422. A side of the first surface 4422 of the holder body 442 facing toward a center is recessed to form a mounting slot 4426, and the first surface 4422 is further provided with a plurality of gaps 4428 connected to the mounting slot 4426, where the plurality of gaps 4428 is evenly disposed around the center of the holder body 442. There may be 2, 6, 8, 10, 15, 20 or more gaps 4428, which may be set based on a requirement. In this embodiment, there are 10 gaps 4428, where every two gaps are adjacent and are spaced apart to form a group, and there are five groups in total. The five groups of gaps 4428 are evenly disposed at intervals around the center of the holder body 442. In other embodiments, each group of gaps 4428 may include 3, 4, 5 or more gaps. In other embodiments. Alternatively, the gaps 4428 may not be evenly disposed around the center of the holder body 442.

The holder body 442 extends along an outer sidewall near the second surface 4424 to form a plurality of lugs 444, where the plurality of lugs 444 is evenly disposed at intervals around the center of the holder body 442, and each lug 444 is provided with a first guide hole 4442. The first guide hole 4442 is strip-shaped, and extends in an extension direction of the lug 444. When the holder body 442 rotates on the base body 222, the first guide hole 4442 and the second guide hole 2822 always have an overlapping part. There may be 2, 3, 5, 6, 8, 10, or more lugs 444, which may be set based on a requirement. In this embodiment, the quantity of lugs 444 is 5 and corresponds to the quantity of second guide holes 2822, and the five lugs 444 correspond to the five second guide holes 2822 on a one-to-one basis. In some embodiments, the first guide hole 4442 may be in an arc shape. In other embodiments, the plurality of lugs 444 may not be evenly disposed at intervals around the center of the holder body 442.

The yoke frame 46 includes a yoke body 462 and a plurality of mounting portions 464 formed by extension from a surface of the yoke body 462 facing toward the connecting arm 224. The yoke body 462 is in an annular shape. The plurality of mounting portions 464 is spaced apart from each other, and are evenly distributed around a center of the light-passing hole 42. To be specific, two adjacent mounting portions 464 form a gap. In this embodiment, there are five mounting portions 464, where the five mounting portions 464 are spaced apart from each other, and are evenly distributed around the center of the light-passing hole 42. A side of the yoke frame 46 away from the mounting portion 464 is fixedly mounted in the mounting slot 4426 of the holder 44. When the yoke frame 46 is fixedly mounted in the mounting slot 4426, the yoke frame 46 may be fixed tightly, or may be connected and fixed by a screw or connected and fixed by a thread, or the like. An inner ring of the yoke frame 46 and an inner ring of the holder 44 form a part of the light-passing hole 42, and the light-passing hole 42 corresponds to the aperture 226. The inner ring of the yoke frame 46 sleeves over the outer peripheral of the base body 222, and is located between the first end 2222 and the second end 2224 of the base body 222, and may rotate around the base body 222. In other embodiments, the yoke frame 46 may also be in a complete ring shape without a gap.

Still referring to FIG. 3, in some embodiments, the yoke frame 46 and the holder 44 are integrated. In other embodiments, the rotor assembly 40 may include only the holder 44, the holder 44 matches the base body 222, and the holder 44 directly sleeves over an outer peripheral of the holder 44.

With reference to FIG. 3, FIG. 5, and FIG. 7, the at least one second magnetic unit 48 and the at least one first magnetic unit 26 are disposed in pairs, each first magnetic unit 26 and a corresponding second magnetic unit 48 are oppositely disposed and form a magnetic unit group 50, the first magnetic unit 26 and the second magnetic unit 48 in each magnetic unit group 50 mutually interact to generate a force, and the force causes the second magnetic unit 48 to rotate relative to the first magnetic unit 26. In this embodiment, a plurality of magnetic unit groups 50 is included, and the plurality of magnetic unit groups 50 is evenly distributed around a central axis of the light-passing hole 42.

There may be one or more second magnetic units 48. When there is a plurality of second magnetic units 48, for example, 2, 3, 5, 6, 9, or more second magnetic units 48, the plurality of second magnetic units 48 is evenly distributed around the central axis of the light-passing hole 42. Each second magnetic unit 48 includes N-1 (N is greater than or equal to 2) adjacent second magnetic members 482 arranged at intervals. For example, there may be 1, 2, 5, 6, 7, 8, 11, 14, 17, or more second magnetic members 482. Each second magnetic unit 48 further corresponds to a mounting portion 464 and a gap 4428, and each second magnetic unit 48 is mounted on the corresponding mounting portion 464 and exposed from the corresponding gap 4428. In this case, the width of each mounting portion 464 in a circumferential direction of the yoke body 462 is greater than or equal to the width of the corresponding second magnetic unit 48 in a circumferential direction of the holder body 442.

Referring to FIG. 7, in this embodiment, there are five second magnetic units 48, and the five second magnetic units 48 are evenly distributed around the central axis of the light-passing hole 42. Each second magnetic unit 48 includes two adjacent second magnetic members 482 disposed at intervals. The second magnetic member 482 may be a magnet. The magnet fits onto an outer sidewall of the mounting portion 464, and magnetic poles of adjacent ends of adjacent magnets are the same. For example, the adjacent ends of the adjacent magnets are both S poles, or the adjacent ends of the adjacent magnets are both N poles. An electromagnetic field generated by the first magnetic unit 26 during energization generates a force to attract or repel the magnet (that is, the second magnetic member 482) generates a force. The interaction between the first magnetic unit 26 and the second magnetic member 482 causes the rotor assembly 40 to rotate around the base body 222.

In some embodiments, the quantity of first magnetic members 262 is greater than the quantity of second magnetic members 482. In a same magnetic unit group 50, when two second magnetic members 482 and two first magnetic members 262 located at one end generate a first force, the first force causes the second magnetic unit 482 to rotate in a first direction relative to the first magnetic unit 26, or when two second magnetic members 482 and two first magnetic members 262 located at the other end generate a second force, the second force causes the second magnetic unit 48 to rotate in a second direction relative to the first magnetic unit 26, where the first direction is opposite to the second direction.

In some embodiments, the first magnetic member 262 is a magnet, and the second magnetic member 482 is a coil. In this case, a relationship between forces of the first magnetic member 262 and the second magnetic member 482 is similar to the foregoing relationship, and is not described again herein.

Referring to FIG. 3, FIG. 4, and FIG. 7, the blade assembly 60 includes a plurality of blades 62, a rotating shaft 622 disposed on each blade 62, and a guide rod 624.

There is a plurality of blades 62, and the plurality of blades 62 is evenly distributed around the through-hole 286. When the blades 62 completely open up the aperture 226, the plurality of blades 62 is successively connected head-to-tail, and a head of each blade 62 overlaps a tail of another blade 62 at a joint along an axial direction of the aperture 226. There may be 2, 3, 5, 6, 8, or more blades 62, which may be set based on a requirement, as long as the quantity corresponds to quantities of lugs 444, second guide holes 2822, and connecting holes 2824. In this embodiment, there are five blades 62, and each blade 62 corresponds to a second guide hole 2822, a connecting hole 2824, a first guide hole 4442, a guide rod 624, and a lug 444. An end of each blade 62 is fixed to the rotating shaft 622. The rotating shaft 622 passes through the connecting hole 2824 to connect to the cover 28, and the blade 62 may rotate around an axis of the rotating shaft 622. The guide rod 624 on each blade 62 passes through the cover body 282 and the rotor assembly 40 in sequence by means of the second guide hole 2822 and the first guide hole 4442. Each blade 62 has a recess 626. Recesses 626 of the plurality of blades all face toward the aperture 226. When the plurality of blades 62 rotates in the first direction (for example, clockwise), the aperture 226 or the through-hole 286 is opened, and the recesses 626 of all the blades 62 may together form an approximately circular hole, where a diameter of the circular hole is greater than or equal to a diameter of the through-hole 286. When the plurality of blades 62 rotates in the second direction (for example, counterclockwise), the aperture 226 may be closed or a size of the aperture 226 or the through-hole 286 may be controlled to control the amount of incoming light.

In some embodiments, the blade assembly 60 further includes a mounting plate 64, where an end of the mounting plate 64 is provided with a through-hole corresponding to the connecting hole 2824, and an end of the rotating shaft 622 passes through the through-hole to connect to an end of the blade 62. An end of the guide rod 624 is mounted on a lateral surface of the mounting plate 64 facing toward the cover body 282. The blade 62 is mounted on a lateral surface of the mounting plate facing away from the cover body 282, and the rotating shaft 622 is fixedly connected to the blade 62 through the through-hole. In some examples, relative positions of the mounting plate 64 and the blade 62 may be adjusted to adjust a pivoting and blocking position of the blade 62 relative to the aperture 226.

The following describes a specific process in which the blades 62 rotate to at least partially block or at least partially open the through-hole 286.

Referring to FIG. 3 and FIG. 7, in each magnetic unit group 50, in a counterclockwise arrangement in each first magnetic unit 26, a first magnetic member 262 in a first position is a right first magnetic member 262, a first magnetic member 262 in a second position is a middle first magnetic member 262, and a first magnetic member 262 in a third position is a left first magnetic member 262. In each second magnetic unit 48, a second magnetic member 482 in a first position is a right first magnetic member 482, and a second magnetic member 482 in a second position is a left first magnetic member 482.

In an initial state, the guide rod 624 is in a first extreme position of the second guide hole 2822 (the position shown in FIG. 7), and the five blades 62 completely block the aperture 226 or the through-hole 286. When the left first magnetic member 262 and the middle first magnetic member 262 are energized, the two first magnetic members 262 (that is, the left first magnetic member 262 and the middle first magnetic member 262) and the two second magnetic members 482 (that is, the left second magnetic member 482 and the right second magnetic member 482) jointly generate a first force. Specifically, the left first magnetic member 262 may magnetically attract the left second magnetic member 482, and the middle first magnetic member 262 may magnetically attract the middle second magnetic member 482, that is, the first force causes the second magnetic members 482 to rotate counterclockwise. Because the second magnetic members 482 are fixedly mounted on the yoke frame 46, and the yoke frame 46 is fixedly mounted on the holder 44, the second magnetic members 482 rotate counterclockwise to drive the holder 44 to rotate counterclockwise, that is, the lugs 444 of the holder 44 also rotate counterclockwise, so that the guide rod 624 passing through the first guide hole 4442 can move from the first extreme position of the second guide hole 2822 to a second extreme position; and when the guide rod 624 is in the second extreme position, the five blades 62 completely open up the aperture 226 or the through-hole 286, and recesses 626 of the five blades 62 jointly form an approximately circular hole (to reduce a windmill effect and avoid formation of flares, which may otherwise affect imaging). When the guide rod 624 moves from the first extreme position to the second extreme position, the guide rod 624 is pushed by the lugs 444 and drives all the blades 62 to rotate around the axis of the rotating shaft 622 to gradually open the aperture 226 or the through-hole 286. When the guide rod 624 moves to a position between the first extreme position and the second extreme position, the aperture 226 or the through-hole 286 is partially opened, or partially blocked. In other words, a relative position of the guide rod 624 in the second guide hole 2822 may be controlled so that an amount of light passing through the aperture 226 or the through-hole 286 is controlled by the blades 62.

In another initial state, the guide rod 624 is in the second extreme position of the second guide hole 2822 (a position opposite to the position shown in FIG. 7), and the five blades 62 completely open up the aperture 226 or the through-hole 286. When the right first magnetic member 262 and the middle first magnetic member 262 are energized, the two first magnetic members 262 (that is, the right first magnetic member 262 and the middle first magnetic member 262) and the two second magnetic members 482 (that is, the left second magnetic member 482 and the right second magnetic member 482) jointly generate a second force. Specifically, the right first magnetic member 262 may magnetically attract the right second magnetic member 482, and the middle first magnetic member 262 may magnetically attract the left second magnetic member 482, that is, the second force causes the second magnetic members 482 to rotate clockwise. Because the second magnetic members 482 are fixedly mounted on the yoke frame 46, and the yoke frame 46 is fixedly mounted on the holder 44, the second magnetic members 482 rotate clockwise to drive the holder 44 to rotate clockwise, that is, the lugs 444 of the holder 44 also rotate clockwise, so that the guide rod 624 passing through the first guide hole 4442 can move from the second extreme position of the second guide hole 2822 to the first extreme position; and when the guide rod 624 is in the first extreme position, the five blades 62 completely block the aperture 226 or the through-hole 286, and the recesses 626 of the five blades 62 jointly form an approximately circular hole (to reduce a windmill effect). When the guide rod 624 moves from the second extreme position to the first extreme position, the guide rod 624 is pushed by the lugs 444 and drives all the blades 62 to rotate around the axis of the rotating shaft 622 to gradually block the aperture 226 or the through-hole 286. When the guide rod 624 moves to a position between the first extreme position and the second extreme position, the aperture 226 or the through-hole 286 is partially blocked, or partially opened. In other words, a relative position of the guide rod 624 in the second guide hole 2822 may be controlled so that an amount of light passing through the aperture 226 or the through-hole 286 is controlled by the blades 62.

In either of the foregoing initial states, the N-1 second magnetic members 482 may correspond to intervals of the N first magnetic members 262 in sequence.

Directions of the first force and the second force are opposite, and magnitudes of the first force and the second force may be the same or different, which may be implemented by adjusting the intensity of a current. The directions of the first force and the second force may be determined jointly by positive and negative electrodes of the current and magnetic poles of the second magnetic member 482, which may be implemented by adjusting a direction of the current passing through a coil. When one end (first end) of the coil is connected to a positive electrode of a power supply, and the other end (second end) is connected to a negative electrode of the power supply, the two first magnetic members 262 (that is, the left first magnetic member 262 and the middle first magnetic member 262) and the two second magnetic members 482 (that is, the left second magnetic member 482 and the right second magnetic member 482) generate a counterclockwise force. When the first end of the coil is connected to the negative electrode of the power supply, and the second end is connected to the positive electrode of the power supply, the two first magnetic members 262 (that is, the left first magnetic member 262 and the middle first magnetic member 262) and the two second magnetic members 482 (that is, the left second magnetic member 482 and the right second magnetic member 482) generate a clockwise force.

In other embodiments, the quantity of magnetic unit groups 50 may remain unchanged, and the magnitudes of the first force and the second force may be increased by increasing the quantity of first magnetic members 262 and second magnetic members 482 in each magnetic unit group 50. Alternatively, the magnitudes of the first force and the second force may be increased by increasing the quantity of magnetic unit groups 50. Alternatively, both the quantity of magnetic unit groups 50 and the quantity of first magnetic members 262 and second magnetic members 482 in each magnetic unit group 50 are increased to increase the magnitudes of the first force and the second force.

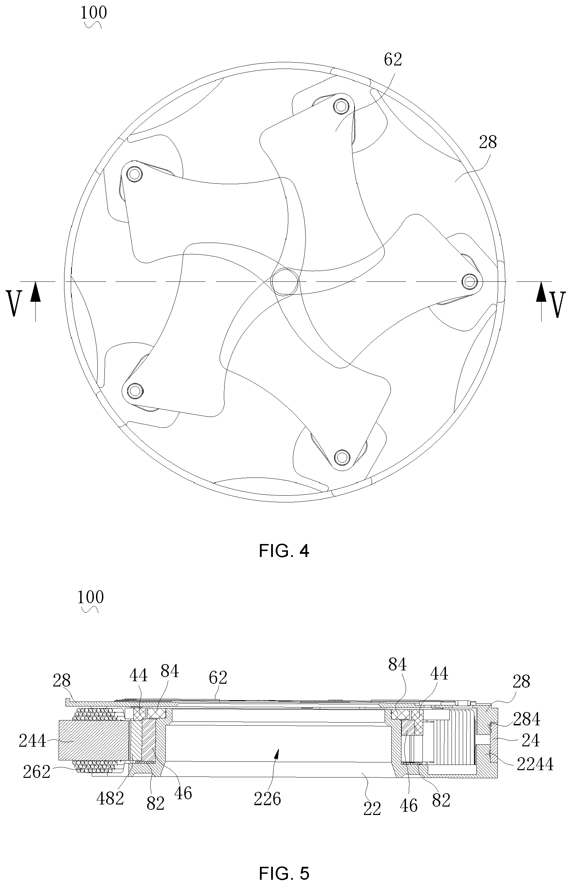

Referring to FIG. 3 and FIG. 5, in some embodiments, the shutter structure 100 may further include a first washer 82, where the first washer 82 sleeves over the first end 2222 of the base body 222 and located between the rotor assembly 40 and the connecting arm 224.

In some embodiments, the shutter structure 100 may further include a second washer 84, where the second washer 84 sleeves over the second end 2224 of the base body 222 and accommodated in the holder body 442. Specifically, an end surface of the second end 2224 of the base body 222 and the outer sidewall jointly form a groove for mounting the second washer 84, an inner ring of the second washer 84 sleeves over a groove wall of the groove, and an outer ring of the second washer 84 abuts against an inner surface of the holder 44. A surface of the second washer 84 facing toward the connecting arm 224 at least partially abuts against a bottom of the groove, and another part of the surface of the second washer 84 facing toward the connecting arm 224 abuts against an end surface of the yoke frame 46 away from the mounting portion 464. The first washer 82 and the second washer 84 may be both disposed, or only one of them may be disposed. The first washer 82 and the second washer 84 are configured to reduce friction between the rotor assembly 40 and the stator assembly 20.

Referring to FIG. 8, the present application further provides a photographing device 1000, where the photographing device 1000 includes a housing 200 and the shutter structure in any one of the foregoing embodiments. The shutter structure 100 is assembled with the housing 200. The photographing device 1000 may be a component or a terminal device having a photographing function, such as a lens module, a camera module, a camera, a camera, a mobile phone, and so on.

In the photographing device 1000 in this embodiment of the present application, the plurality of blades 62 is all rotatably connected by the rotating shaft 622 to the side of the cover 28 of the stator assembly 20 away from the rotor assembly 20, the guide rod 624 on each blade 62 passes through the cover 28 and the rotor assembly 40 in sequence, and the rotor assembly 40 interacts with the stator assembly 20 so that the rotor assembly 40 can rotate relative to the stator assembly 20, thereby driving the guide rod 624 to move in the cover 28, and further driving the plurality of blades 62 to rotate around the rotating shaft 622 to at least partially block the through-hole 286 or at least partially open the through-hole 286. Therefore, the shutter structure 100 can avoid using the multi-link structure and the spring structure to implement rotation of the blades 62 and the exposure, thereby keeping the structure simple and compact.

In the present application, unless otherwise specified and defined, that a first feature is "above" or "below" a second feature may include that the first feature and the second feature are in direct contact, or may include that the first feature and the second feature are not in direct contact but come into contact through an additional feature between the first feature and the second feature. In addition, that the first feature is "above", "over", or "on the top of" the second feature includes that the first feature is directly above and obliquely above the second feature or only indicates that a level of the first feature is higher than that of the second feature. That the first feature is "below", "under", or "at the bottom of' the second feature includes that the first feature is directly under and obliquely under the second feature or only indicates that the level of the first feature is lower than that of the second feature.

The following disclosure provides a plurality of different embodiments or examples for implementing different structures in the present application. To simplify the disclosure of the present application, the following describes components and arrangements in specific examples. Certainly, they are only examples and are not intended to limit the present application. In addition, reference numerals and/or reference letters may be repeated in different examples in the present application, and the repetition is for a purpose of simplification and clarity and does not indicate a relationship between various embodiments and/or arrangements discussed. In addition, the present application provides examples of various specific processes and materials, but a person of ordinary skill in the art may be aware of application of other processes and/or use of other materials.

In the descriptions of this specification, descriptions with reference to the terms "one embodiment", "some embodiments", "exemplary embodiment", "example", "specific example", "some examples", and the like mean that specific features, structures, materials, or characteristics described with reference to the embodiment(s) or example(s) are included in at least one embodiment or example of the present application. In this specification, exemplary descriptions of the foregoing terms may not refer to a same embodiment or a same example. In addition, the described specific features, structures, materials, or characteristics may be combined in one or more embodiments or examples in an appropriate manner.

Although the embodiments of the present application have been illustrated and described, a person of ordinary skill in the art may understand that a plurality of changes, modifications, replacements, and variations may be made to the embodiments without departing from the principle and essence of the present application. The scope of the present application is defined by the claims and their equivalents.

## Claims

1. A shutter structure, **characterized in that**, comprising:
a stator assembly, wherein the stator assembly includes an annular mounting member, a base mounted on a first side of the mounting member, and a cover mounted on a second side of the mounting member, the base is provided with an aperture, the cover is provided with a through-hole corresponding to the aperture, and the first side is opposite to the second side;
a rotor assembly, wherein the rotor assembly is sandwiched between the base and the cover, the rotor assembly is sleeved over by the mounting member from the second side and provided with a light-passing hole corresponding to the aperture and the through-hole, and the rotor assembly interacts with the stator assembly so that the rotor assembly is rotatable relative to the stator assembly; and
a blade assembly, wherein the blade assembly includes a plurality of blades, the plurality of blades is all rotatably connected by a rotating shaft to a side of the cover away from the rotor assembly, a guide rod on each blade passes through the cover and the rotor assembly in sequence, and when the rotor assembly rotates relative to the stator assembly, the rotor assembly drives the guide rod to move in the cover, thereby driving the plurality of blades to rotate around an axis of the rotating shaft to at least partially block the through-hole or at least partially open the through-hole.

2. The shutter structure according to claim 1, **characterized in that**, the stator assembly includes at least one first magnetic unit, the rotor assembly includes at least one second magnetic unit, the at least one second magnetic unit and the at least one first magnetic unit are disposed in pairs, each first magnetic unit and the corresponding second magnetic unit are oppositely disposed and form a magnetic unit group, the first magnetic unit and the second magnetic unit in each magnetic unit group mutually interact to generate a force, and the force causes the second magnetic unit to rotate relative to the first magnetic unit.

3. The shutter structure according to claim 2, **characterized in that**, there is a plurality of magnetic unit groups, and the plurality of magnetic unit groups is evenly distributed around a central axis of the aperture.

4. The shutter structure according to claim 2, **characterized in that**, each first magnetic unit includes N first magnetic members arranged at intervals, and each second magnetic unit includes N-1 adjacent second magnetic members, which are arranged at intervals and respectively corresponding to the intervals of the N first magnetic members, wherein N is greater than or equal to 2.

5. The shutter structure according to claim 2, **characterized in that**, each first magnetic unit includes three adjacent first magnetic members arranged at intervals, each second magnetic unit includes two adjacent second magnetic members arranged at intervals, and in the same magnetic unit group, when the two second magnetic members and two first magnetic members located at one end generate a first force, the first force causes the second magnetic unit to rotate in a first direction relative to the first magnetic unit, or when the two second magnetic members and two first magnetic members located at the other end generate a second force, the second force causes the second magnetic unit to rotate in a second direction relative to the first magnetic unit, wherein the first direction is opposite to the second direction.

6. The shutter structure according to claim 2, **characterized in that**, each first magnetic unit includes a plurality of adjacent first magnetic members arranged at intervals, each second magnetic unit includes at least one second magnetic member, the quantity of first magnetic members is greater than the quantity of second magnetic members in the same magnetic unit group, and when at least one first magnetic member and at least one second magnetic member located at one end generate a first force, the first force causes the second magnetic unit to rotate in a first direction relative to the first magnetic unit, or when at least one first magnetic member and at least one second magnetic member located at the other end generate a second force, the second force causes the second magnetic unit to rotate in a second direction relative to the first magnetic unit, wherein the first direction is opposite to the second direction.

7. The shutter structure according to any one of claims 4 to 6, **characterized in that**, the first magnetic member includes a coil, and the second magnetic member includes a magnet; or
the first magnetic member includes a magnet, and the second magnetic member includes a coil.

8. The shutter structure according to any one of claims 4 to 6, **characterized in that**, when the first magnetic member or the second magnetic member includes a plurality of magnets, magnetic poles of adjacent ends of adjacent magnets are the same.

9. The shutter structure according to any one of claims 4 to 6, **characterized in that**, the base includes a cylinder-shaped base body and a plurality of connecting arms that extends from an outer peripheral wall of the base body, and the plurality of connecting arms is located at a first end of the base body; and the mounting member sleeves over the base body and sits on the plurality of connecting arms, and each connecting arm is detachably coupled with the mounting member.

10. The shutter structure according to claim 9, **characterized in that**, the mounting member includes a mounting ring and a supporting portion that extends from an inner wall of the mounting ring, each connecting arm is detachably engaged with the inner wall of the mounting ring, and the first magnetic member is mounted on the supporting portion.

11. The shutter structure according to claim 10, **characterized in that**, a plurality of snap-fit slots corresponding to the plurality of connecting arms is provided on the inner wall, each connecting arm includes an extension portion that extends from the outer peripheral wall of the base body and a snap-fit portion that extends from an end of the extension portion away from the outer peripheral wall, and when each connecting arm is coupled with the mounting member, the snap-fit portion is snapped into the snap-fit slot from the first side.

12. The shutter structure according to claim 11, **characterized in that**, the mounting member further includes a blocking portion that extends from an end of each supporting portion away from the inner wall, and the first magnetic member is located between the blocking portion and the inner wall of the mounting ring.

13. The shutter structure according to claim 10, **characterized in that**, the rotor assembly further includes a holder, the holder includes an annular holder body and a plurality of lugs that extends along an outer sidewall of the holder body, the quantity of the lugs corresponds to the quantity of the guide rods, the guide rod passes through the corresponding lug, the holder body sleeves over the base body and located at a second end of the base body, and the second end is opposite to the first end.

14. The shutter structure according to claim 13, **characterized in that**, the rotor assembly further includes a yoke frame, the yoke frame is mounted in the holder body, the yoke frame sleeves over the base body and located between the first end and the second end, and the second magnetic unit is mounted on an outer side of the yoke frame and exposed from the holder body.

15. The shutter structure according to claim 14, **characterized in that**, a first surface of the holder body proximal to the first side is recessed at a side facing toward a center to form a mounting slot, and the yoke frame is mounted at a bottom of the mounting slot.

16. The shutter structure according to claim 15, **characterized in that**, the first surface is further provided with a gap connected to the mounting slot, and the yoke frame includes:
an annular yoke body; and
a plurality of mounting portions extending from a surface of the yoke body facing toward the connecting arm, wherein the second magnetic member is mounted on an outer surface of the mounting portion and exposed from the gap.

17. The shutter structure according to claim 16, **characterized in that**, each mounting portion corresponds to at least one second magnetic unit, and the yoke body is mounted in the mounting slot.

18. The shutter structure according to claim 16, **characterized in that**, a width of each mounting portion in a circumferential direction of the yoke body is greater than or equal to a width of the corresponding second magnetic unit in a circumferential direction of the holder body.

19. The shutter structure according to claim 13, **characterized in that**, a first guide hole is provided in the lug for the guide rod to pass through, and the first guide hole is strip-shaped.

20. The shutter structure according to claim 19, **characterized in that**, the cover includes a cover body and a plurality of coupling portions that extends from the cover body toward a surface of the base, each coupling portion is engaged with the inner wall of the mounting ring, and the coupling portion is snapped into the snap-fit slot from the second side.

21. The shutter structure according to claim 20, **characterized in that**, the cover body is provided with a plurality of second guide holes spaced apart from each other and a plurality of connecting holes, each blade corresponds to one second guide hole and one connecting hole, the guide rod of each blade sequentially passes through the corresponding second guide hole and first guide hole, and each blade is rotatably connected to the corresponding connecting hole by the rotating shaft.

22. The shutter structure according to claim 21, **characterized in that**, the plurality of blades is evenly distributed around the through-hole.

23. The shutter structure according to claim 21, **characterized in that**, the second guide hole is in an arc shape, and a center of curvature of the arc is coincide a center of the connecting hole on the same blade.

24. The shutter structure according to claim 13, **characterized in that**, the shutter structure further comprises a first washer, wherein the first washer sleeves over the first end of the base body and located between the rotor assembly and the connecting arm; and/or
the shutter structure further comprises a second washer, wherein the second washer sleeves over the second end of the base body and accommodated in the holder body.

25. A photographing device, **characterized in that**, comprising:
a housing; and
a shutter structure, wherein the shutter structure is assembled with the housing, and the shutter structure includes:
a stator assembly, wherein the stator assembly includes an annular mounting member, a base mounted on a first side of the mounting member, and a cover mounted on a second side of the mounting member, the base is provided with an aperture, the cover is provided with a through-hole corresponding to the aperture, and the first side is opposite to the second side;
a rotor assembly, wherein the rotor assembly is sandwiched between the base and the cover, the rotor assembly is sleeved over by the mounting member from the second side and provided with a light-passing hole corresponding to the aperture and the through-hole, and the rotor assembly interacts with the stator assembly so that the rotor assembly is rotatable relative to the stator assembly; and
a blade assembly, wherein the blade assembly includes a plurality of blades, the plurality of blades is all rotatably connected by a rotating shaft to a side of the cover away from the rotor assembly, a guide rod on each blade passes through the cover and the rotor assembly in sequence, and when the rotor assembly rotates relative to the stator assembly, the rotor assembly drives the guide rod to move in the cover, thereby driving the plurality of blades to rotate around an axis of the rotating shaft to at least partially block the through-hole or at least partially open the through-hole.

26. The photographing device according to claim 25, **characterized in that**, the stator assembly includes at least one first magnetic unit, the rotor assembly includes at least one second magnetic unit, the at least one second magnetic unit and the at least one first magnetic unit are disposed in pairs, each first magnetic unit and the corresponding second magnetic unit are opposite disposed and form a magnetic unit group, the first magnetic unit and the second magnetic unit in each magnetic unit group mutually interact to generate a force, and the force causes the second magnetic unit to rotate relative to the first magnetic unit.

27. The photographing device according to claim 26, **characterized in that**, there is a plurality of magnetic unit groups, and the plurality of magnetic unit groups is evenly distributed around a central axis of the aperture.

28. The photographing device according to claim 26, **characterized in that**, each first magnetic unit includes N first magnetic members arranged at intervals, and each second magnetic unit includes N-1 adjacent second magnetic members, which are arranged at intervals and respectively corresponding to the intervals of the N first magnetic members, wherein N is greater than or equal to 2.

29. The photographing device according to claim 26, **characterized in that**, each first magnetic unit includes three adjacent first magnetic members arranged at intervals, each second magnetic unit includes two adjacent second magnetic members arranged at intervals, and in the same magnetic unit group, when the two second magnetic members and two first magnetic members located at one end generate a first force, the first force causes the second magnetic unit to rotate in a first direction relative to the first magnetic unit, or when the two second magnetic members and two first magnetic members located at the other end generate a second force, the second force causes the second magnetic unit to rotate in a second direction relative to the first magnetic unit, wherein the first direction is opposite to the second direction.

30. The photographing device according to claim 26, **characterized in that**, each first magnetic unit includes a plurality of adjacent first magnetic members arranged at intervals, each second magnetic unit includes at least one second magnetic member, the quantity of first magnetic members is greater than the quantity of second magnetic members in the same magnetic unit group, and when at least one first magnetic member and at least one second magnetic member located at one end generate a first force, the first force causes the second magnetic unit to rotate in a first direction relative to the first magnetic unit, or when at least one first magnetic member and at least one second magnetic member located at the other end generate a second force, the second force causes the second magnetic unit to rotate in a second direction relative to the first magnetic unit, wherein the first direction is opposite to the second direction.

31. The photographing device according to any one of claims 28 to 30, **characterized in that**, the first magnetic member includes a coil, and the second magnetic member includes a magnet; or
the first magnetic member includes a magnet, and the second magnetic member includes a coil.

32. The photographing device according to any one of claims 28 to 30, **characterized in that**, when the first magnetic member or the second magnetic member includes a plurality of magnets, magnetic poles of adjacent ends of adjacent magnets are the same.

33. The photographing device according to any one of claims 28 to 30, **characterized in that**, the base includes a cylinder-shaped base body and a plurality of connecting arms that extends from an outer peripheral wall of the base body, and the plurality of connecting arms is located at a first end of the base body; and the mounting member sleeves over the base body and sits on the plurality of connecting arms, and each connecting arm is detachably coupled with the mounting member.

34. The photographing device according to claim 33, **characterized in that**, the mounting member includes a mounting ring and a supporting portion that extends from an inner wall of the mounting ring, each connecting arm is detachably engaged with the inner wall of the mounting ring, and the first magnetic member is mounted on the supporting portion.

35. The photographing device according to claim 34, **characterized in that**, a plurality of snap-fit slots corresponding to the plurality of connecting arms is provided on the inner wall, each connecting arm includes an extension portion that extends from the outer peripheral wall of the base body and a snap-fit portion that extends from an end of the extension portion away from the outer peripheral wall, and when each connecting arm is coupled with the mounting member, the snap-fit portion is snapped into the snap-fit slot from the first side.

36. The photographing device according to claim 35, **characterized in that**, the mounting member further includes a blocking portion that extends from an end of each supporting portion away from the inner wall, and the first magnetic member is located between the blocking portion and the inner wall of the mounting ring.

37. The photographing device according to claim 34, **characterized in that**, the rotor assembly further includes a holder, the holder includes an annular holder body and a plurality of lugs that extends along an outer sidewall of the holder body, the quantity of the lugs corresponds to the quantity of the guide rods, the guide rod passes through the corresponding lug, the holder body sleeves over the base body and located at a second end of the base body, and the second end is opposite to the first end.

38. The photographing device according to claim 37, **characterized in that**, the rotor assembly further includes a yoke frame, the yoke frame is mounted in the holder body, the yoke frame sleeves over the base body and located between the first end and the second end, and the second magnetic unit is mounted on an outer side of the yoke frame and exposed from the holder body.

39. The photographing device according to claim 38, **characterized in that**, a first surface of the holder body proximal to the first side is recessed at a side facing toward a center to form a mounting slot, and the yoke frame is mounted at a bottom of the mounting slot.

40. The photographing device according to claim 39, **characterized in that**, the first surface is further provided with a gap connected to the mounting slot, and the yoke frame includes:
an annular yoke body; and
a plurality of mounting portions extending from a surface of the yoke body facing toward the connecting arm, wherein the second magnetic member is mounted on an outer surface of the mounting portion and exposed from the gap.

41. The photographing device according to claim 40, **characterized in that**, each mounting portion corresponds to at least one second magnetic unit, and the yoke body is mounted in the mounting slot.

42. The photographing device according to claim 40, **characterized in that**, a width of each mounting portion in a circumferential direction of the yoke body is greater than or equal to a width of the corresponding second magnetic unit in a circumferential direction of the holder body.

43. The photographing device according to claim 37, **characterized in that**, a first guide hole is provided in the lug for the guide rod to pass through, and the first guide hole is strip-shaped.

44. The photographing device according to claim 43, **characterized in that**, the cover includes a cover body and a plurality of coupling portions that extends from the cover body toward a surface of the base, each coupling portion is engaged with the inner wall of the mounting ring, and the coupling portion is snapped into the snap-fit slot from the second side.

45. The photographing device according to claim 44, **characterized in that**, the cover body is provided with a plurality of second guide holes spaced apart from each other and a plurality of connecting holes, each blade corresponds to one second guide hole and one connecting hole, the guide rod of each blade sequentially passes through the corresponding second guide hole and first guide hole, and each blade is rotatably connected to the corresponding connecting hole by the rotating shaft.

46. The photographing device according to claim 45, **characterized in that**, the plurality of blades is evenly distributed around the through-hole.

47. The photographing device according to claim 45, **characterized in that**, the second guide hole is in an arc shape, and a center of curvature of the arc is coincide a center of the connecting hole on the same blade.

48. The photographing device according to claim 37, **characterized in that**, the shutter structure further includes a first washer, wherein the first washer sleeves over the first end of the base body and located between the rotor assembly and the connecting arm; and/or
the shutter structure further includes a second washer, wherein the second washer sleeves over the second end of the base body and accommodated in the holder body.
